(19) Europäisches Patentamt
European Patent Office
Office européen des brevets

(11) **EP 2 864 263 B1**

(12) **EUROPÄISCHE PATENTSCHRIFT**

(45) Veröffentlichungstag und Bekanntmachung des Hinweises auf die Patenterteilung:
**07.08.2019   Patentblatt 2019/32**

(51) Int Cl.:
*C03C 3/087* (2006.01)        *C03C 3/095* (2006.01)
*F24C 15/10* (2006.01)        *C03C 3/097* (2006.01)
*C03C 4/02* (2006.01)        *C03C 10/00* (2006.01)

(21) Anmeldenummer: **13730606.4**

(22) Anmeldetag: **25.06.2013**

(86) Internationale Anmeldenummer:
**PCT/EP2013/063223**

(87) Internationale Veröffentlichungsnummer:
**WO 2014/001301 (03.01.2014 Gazette 2014/01)**

(54) **GLASKERAMIK UND VERFAHREN ZU DEREN HERSTELLUNG**

GLASS-CERAMIC AND PROCESS FOR THE PRODUCTION THEREOF

VITROCÉRAMIQUE ET SON PROCÉDÉ DE FABRICATION

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **26.06.2012   DE 102012105576**

(43) Veröffentlichungstag der Anmeldung:
**29.04.2015   Patentblatt 2015/18**

(73) Patentinhaber: **SCHOTT AG**
**55122 Mainz (DE)**

(72) Erfinder:
 • **GABEL, Falk**
   **65388 Schlangenbad (DE)**

 • **SIEBERS, Friedrich**
   **55283 Nierstein (DE)**
 • **WEISS, Evelin**
   **55131 Mainz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-A1- 1 837 314        EP-A1- 1 957 421
EP-A1- 2 377 831        DE-A1-102008 050 263
DE-A1-102010 032 112        US-A1- 2011 009 254

**Beschreibung**

Die Erfindung betrifft allgemein das technische Gebiet der Glaskeramiken. Insbesondere betrifft die Erfindung transparente Glaskeramiken, die mit färbenden polyvalenten Ionen versehen sind.

Glaskeramik-Platten kommen unter anderem als Kochfelder zum Einsatz. Die hierfür verwendeten Glaskeramiken weisen typischerweise eine geringe bis verschwindende Temperaturausdehnung im Temperaturbereich zwischen Raumtemperatur und der Betriebstemperatur von bis zu 700 °C von üblicherweise kleiner 1,5 x $10^{-6}$/K auf. In einer Ausführungsform sind diese Glaskeramiken im Volumen transparent eingefärbt, um die unter dem Kochfeld angeordneten Komponenten des Herds zu verbergen. In einer zweiten Ausführungsform sind die Glaskeramiken transparent und die Durchsicht auf die technischen Komponenten unter der Glaskeramik kann durch blickdichte also lichtblockende Beschichtungen auf Unter- und/oder Oberseite verhindert werden. Diese transparente Ausführungsform der Glaskeramik findet auch für Kaminscheiben Anwendung.

Aus praktischen oder ästhetischen Gründen besteht auch ein Bedürfnis, leuchtende Anzeigeelemente durch die Glaskeramikplatte hindurch scheinen zu lassen. Hohe Transmission und geringe Farbverfälschung sind dabei wünschenswert. Bei der transparenten Ausführungsform soll die gute und unverfälschte Durchsicht z. B. auf eine farbige Unterseitenbeschichtung oder auf das Flammenbild im Kamin gewährleistet sein.

Die WO 2010/040443 A2 beschreibt eine transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, frei von den chemischen Läutermitteln Arsenoxid und/oder Antimonoxid ist. Die Glaskeramik weist Transmissionswerte von größer als 0,1 % im Bereich des sichtbaren Lichtes im gesamten Wellenlängenbereich größer als 450 nm auf, wobei die Lichttransmission im Sichtbaren im Bereich von 0,8 - 2,5 % und im Infraroten bei 1600 nm im Bereich von 45 - 85 % liegt.

DE 10 2010 032112 A1 und DE 10 2008 050263 A1 offenbaren transparente, eingefärbte Kochflächen aus Lithium-Aluminosilikat-Glaskeramik.

Um die Färbung zu erreichen werden Vanadinoxid, $V_2O_5$, sowie Eisenoxid als Farboxide hinzugegeben.

Vanadinoxid wirkt dabei sehr stark färbend. Entsprechend gering sind die zugesetzten Mengen. Damit geht einher, dass die Einstellung einer vorgesehenen Transmission kritisch ist, da geringe Abweichungen des Vanadium-Gehalts im Gemenge des Glases zu starken Änderungen im Farbeindruck der Glaskeramik bewirken. Dieses Problem verschärft sich noch weiter, wenn höhere Transmissionswerte im sichtbaren Spektralbereich erzielt werden sollen, da die Relativschwankungen des Vanadinoxidgehalts bei gegebener Unsicherheit in der Gemengedosierung dabei noch zunehmen.

Es wäre daher wünschenswert, eine Glaskeramik bereitzustellen, bei deren Herstellung eine zuverlässige Färbung mit definierter Transmission gegeben ist. Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Der Erfindung liegt die überraschende Erkenntnis zugrunde, dass ein hoher Gehalt des an sich selbst stark färbenden Eisenoxids von mehr als 1000 ppmw, also mehr als 0,1 Gewichtsprozent nicht die Transmission weiter erniedrigt, sondern vielmehr so mit dem Vanadinoxid zusammenwirkt, dass die Absorption durch das Vanadinoxid abgeschwächt wird.

Demgemäß ist der Absorptionskoeffizient der erfindungsgemäßen Glaskeramik zumindest in einem Teilintervall des sichtbaren Spektralbereichs niedriger als der durch Vanadinoxid in der zugegebenen Konzentration verursachte Absorptionskoeffizient.

Im Speziellen sieht die Erfindung einen Lithium-Aluminosilikat-Glaskeramikartikel gemäß Anspruch 1, insbesondere in Form einer Glaskeramikplatte vor, welche Vanadinoxid als färbenden Bestandteil zu mindestens 0,005, vorzugsweise mindestens 0,01 Gewichtsprozent, besonders bevorzugt bis 0,05 Gewichtsprozent aufweist, wobei der Gehalt von Zinnoxid weniger als 0,5 Gewichtsprozent beträgt, und wobei die Glaskeramik als weiterer Bestandteil Eisenoxid mit einem Anteil von mehr als 0,1 Gewichtsprozent enthält, wobei der Eisenoxid- Gehalt mindestens so groß oder größer als der Vanadinoxidgehalt ist, und wobei die Lichttransmission des Glaskeramikartikels im sichtbaren Spektralbereich bei Beleuchtung senkrecht zur Oberfläche des Glaskeramikartikels mehr als 2,5 % beträgt. Bevorzugt wird dabei sogar eine Transmission von mindestens 5% eingestellt. Insbesondere wird der Eisenoxid-Gehalt bevorzugt auf größer 0,12 Gewichtsprozent eingestellt.

Die Erfindung bezieht sich nicht nur auf flache Glaskeramikplatten. Vielmehr kann ein erfindungsgemäßer Glaskeramikartikel auch gewölbt oder dreidimensional verformt sein, beispielsweise in Form einer Platte mit umgebogenen Rändern oder in Form eines Gefäßes, wie etwa bei einem Wok oder einer aus einem Teilbereich der Platte ausgeformten Kuhle, die dann einen Wok bildet.

Die hohe Transmission wird dabei wie gesagt überraschend dadurch verursacht, dass das Eisenoxid oder Ceroxid die färbende, beziehungsweise lichtabsorbierende Eigenschaft des Vanadinoxids reduziert.

Als Transmission im Sinne der Erfindung wird die nach DIN 5033 gemessene Transmission bezeichnet. Diese ist identisch mit dem Y-Wert gemäß dem CIE-Farbsystem, gemessen mit Normlicht C. Dieses Licht entspricht Weißlicht mit einer Farbtemperatur von 6800K und repräsentiert damit mittleres Tageslicht. Mit anderen Worten weist die Glaskeramik eine Y-Wert gemäß dem CIE-Farbsystem, gemessen mit Normlicht C in Durchstrahlung von mindestens Y=2,5%, vorzugsweise mindestens Y=5% auf.

Ein entsprechender Effekt zeigt sich nicht nur bei der Zugabe von Eisenoxid, sondern auch bei Ceroxid. Demgemäß kann auch eine Zugabe von mindestens 0,1 Gewichtsprozend Ceroxid vorgesehen werden.

Für die Erfindung wird eine Lithium-Aluminosilikat-Glaskeramik verwendet. Diese ist aufgrund ihrer niedrigen bis verschwindenden Wärmeausdehnung in einem weiten Temperaturbereich für Kochfelder besonders geeignet.

Bevorzugt weist eine solche Glaskeramik folgende wesentlichen Komponenten in Gewichtsprozent auf Oxidbasis auf:

| | |
|---|---|
| $Li_2O$ | 3 - 5, |
| $Al_2O_3$ | 18 - 25, |
| $SiO_2$ | 55 - 75, |
| $TiO_2$ | 1 - 5. |

Wie in der DE 19939787 C2 und der WO 2010/040443 A2 erläutert wird, soll die Einfärbung durch $V_2O_5$ durch einen Redoxvorgang erfolgen. Im kristallisierbaren Ausgangsglas färbt das $V_2O_5$ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner soll dabei das Läutermittel wirken, wie durch Mössbauer-Untersuchungen an Sb- und Sn-geläuterten Zusammensetzungen gezeigt worden ist. Beim Keramisieren wird ein Teil des Sb bzw. Sn oder auch As im Ausgangsglas in die höhere Oxidationsstufe $Sb^{5+}$, beziehungsweise $Sn^{4+}$ oder $As^{5+}$ überführt. Es wurde postuliert, dass das Vanadium in reduzierter Oxidationsstufe als $V^{4+}$ oder $V^{3+}$ in den Glaskeramikkristall eingebaut wird und dort durch Elektronen-Chargetransfer-Reaktionen intensiv färbt. Als weiterer Redoxpartner kann auch $TiO_2$ die Einfärbung durch Vanadiumoxid verstärken. Legt man diesen Mechanismus zugrunde, so kann angenommen werden, dass Eisenoxid oder Ceroxid in hinreichend großer Menge den Einbau des Vanadinoxids in den Glaskeramikkristall teilweise unterbindet, und/oder einer Reduktion des Vanadinoxids entgegenwirkt. Als Glaskeramikkristall kommt die üblicherweise aus Hochquarz-Mischkristallen bestehende Hauptphase oder die Keimkristalle aus $TiO_2$, $ZrO_2$, und falls vorhanden $SnO_2$ in Frage.

Für den der Erfindung zugrundeliegenden Entfärbemechanismus erweist es sich als günstig, entsprechend keine zu hohen Gehalte an Zinn- und Titanoxid vorzusehen, oder diese in Verhältnis zum Gehalt von $Fe_2O_3$ zu setzen. Demgemäß ist vorgesehen, dass die Glaskeramik einen Gehalt von Zinnoxid von weniger als 0,5 Gewichtsprozent, vorzugsweise einen Gehalt von Zinnoxid im Bereich von 0,15 bis 0,5 Gewichtsprozent, besonders bevorzugt im Bereich von 0,2 bis 0,45 Gewichtsprozent aufweist. Diese Zinnoxid-Gehalte erweisen sich dennoch als ausreichend, um auch ohne nennenswerte Mengen von Arsenoxid, $As_2O_3$ oder Antimomonoxid, $Sb_2O_3$ das Ausgangsglas der Glaskeramik zu läutern. Vorzugsweise beträgt der Gehalt von $As_2O_3$ und $Sb_2O_3$ zusammen weniger als 0,1 Gewichtsprozent, besonders bevorzugt ist die Glaskeramik technisch frei von diesen Läutermitteln. Diese sind also mit gängigen Verfahren zur Bestimmung der Gewichtsanteile nicht nachweisbar.

Die Läuterung mit Zinnoxid kann durch Chlorid- und/oder Sulfatverbindungen sowie durch eine Hochtemperaturläuterung oberhalb 1750 °C unterstützt werden. Zusätze von Fluor- oder Brom-Verbindungen zur Läuterung sind ungünstig wegen der korrosiven Wirkung der Dämpfe auf das Schmelzaggregat. Bevorzugt liegen daher die Gehalte in der Glaskeramik, etwa resultierend aus Gemengeverunreinigungen, unter 0,05 Gew.%. Besonders bevorzugt werden Gehalte von Fluor- oder Bromverbindungen von unter 0,01 Gew%.

Für den Titanoxid-Gehalt ist es entsprechend günstig, wenn dieser, wie auch bei der oben angegebenen Zusammensetzung nicht höher als 5 Gewichtsprozent liegt. Bevorzugt wird ein Gehalt von 2,5 bis 5 Gewichtsprozent. Ganz besonders bevorzugt wird ein Gehalt von höchstens 3,9 Gewichtsprozent. Mit diesem Gehalt wird gleichzeitig sichergestellt, dass eine hinreichende Keimbildung zur Keramisierung erfolgt, denn Titanoxid wirkt als Keimbildner.

Den Elementen Eisen und Cer ist gemeinsam, dass sie sich leicht zwischen verschiedenen Oxidationsstufen überführen lassen. Es wird vermutet, dass anstelle einer Reduktion des Vanadinoxids durch Zinnoxid und Titanoxid eine Reduktion des $Fe^{3+}$ und/oder $Ce^{4+}$ erfolgt, beziehungsweise, dass die Reduktion des Vanadinoxids mit der Reduktion des $Fe^{3+}$ und/oder $Ce^{4+}$ konkurriert. Davon ausgehend ist es günstig, den Gesamtgehalt von Zinnoxid und Titanoxid gegenüber dem Gesamtgehalt von Eisenoxid und Ceroxid in ein Verhältnis zu setzen. So gilt gemäß einer Weiterbildung der Erfindung für die Gehalte von Zinnoxid, Titanoxid, Eisenoxid und Ceroxid die Beziehung $(M(SnO_2) + 0,1 \cdot M(TiO_2)) / (M(Fe_2O_3) + M(CeO_2)) < 3$. Dabei bezeichnet M jeweils die Menge/den Anteil des in Klammern genannten Metalloxids in Gewichtsprozent.

Entsprechend einer bevorzugten Ausgestaltungsvariante der Erfindung kann es vorgesehen sein, dass die Summe der Gewichtsanteile von Eisenoxid und Ceroxid an dem Lithium-Aluminosilikat-Glaskeramikartikel zwischen einem Faktor von 5 bis zu einem Faktor von 20 größer ist als der Gewichtsanteil von Vanadinoxid. Ab einem Faktor von 5 kann eine nutzbare Entfärbung des Glaskeramik-Artikels erreicht werden. Durch eine geeignete Wahl des Faktors in dem Bereich zwischen 5 und 20 lässt sich die Transmission des Glaskeramik-Artikels in einem weiten Bereich einstellen. Über einem Faktor von 20 kann keine weitere relevante Transmissionssteigerung im sichtbaren Bereich mehr erreicht werden. Eine weitere Erhöhung des Eisenoxid- oder Cergehalts führt hingegen zu einer unerwünschten Reduzierung der Transmission im infraroten Bereich.

Die Erfindung ermöglicht es nun, dass ein konstanter Vanadinoxid-Gehalt im Gemenge eingestellt werden kann und der gewünschte Farbton, beziehungsweise die gewünschte Transmission über den Eisenoxid-Gehalt eingestellt wird. Die Farbton-Änderung ist in Abhängigkeit von der Variation des Eisenoxid-Gehalts schwächer, als dies bei einer Variation des Vanadinoxid-Gehalts der Fall ist. Damit kann ein gewünschter Farbton, beziehungsweise eine gewünschte Transmission sehr genau eingestellt werden. Entsprechend geringer sind auch herstellungsbedingte Schwankungen des Farbtons.

Chromoxid hat sich in Verbindung mit Vanadiumoxid als Färbemittel und Cer- oder Eisenoxid zur Entfärbung allerdings als nachteilig herausgestellt. Gemäß noch einer Weiterbildung der Erfindung ist daher vorgesehen, dass der Gewichtsanteil an Chrom oder Chromoxid kleiner als 0,01%, vorzugsweise kleiner als 0,005%, ist. Chromoxid färbt zusätzlich und verfügt über eigene Absorptionsbanden. Die selektive Färbung macht es schwierig, einen glatten Transmissionsverlauf einzustellen und kann bestimmte Anzeigefarben selektiv schwächen. Weiterhin ist Chromoxid ein starker, aber prozesstechnisch schwer zu kontrollierender Keimbildner. So wird im Artikel "Ultrafine grained glass-ceramics obtained with Cr2O3-additions", B. Andrianasolo et al., J. Non-Cryst. Solids 126 (1990) 103-110 als Schlussfolgerung beschrieben, dass Chrom eine kritische Komponente zur Herstellung ultrafeiner Glaskeramik ist. Chrom, obwohl es nicht in den Keimbildnerkristall eingebaut wird, beeinflusst demnach bereits in kleinen Mengen die Keimbildung.

Die Herstellung eines erfindungsgemäßen Glaskeramik-Artikels erfolgt insbesondere mit einem Verfahren mit folgenden Schritten:

- Herstellen eines Gemenges für Lithium-Aluminosilikat-Glaskeramiken, wobei das Gemenge Vanadinoxid zu mindestens mindestens 0,005, vorzugsweise mindestens 0,01, besonders bevorzugt bis 0,05 Gewichtsprozent und Zinnoxid zu weniger als 0,5 Gewichtsprozent enthält,
- Festlegen eines Transmissionswertes des Glaskeramikartikels von 2,5% oder mehr im sichtbaren Spektralbereich, wobei der Transmissionwert höher liegt, als der Transmissionswert einer aus demselben Vanadinoxid-haltigen Gemenge, aber mit einem Eisenoxid-Gehalt von weniger als 0,1 Gewichtsprozent hergestellten Glaskeramik,
- Zugeben von Eisenoxid in einer Menge, welche die Absorbtion des Vanadinoxids im sichtbaren Spektralbereich so weit aufhebt, dass der festgelegte Transmissionswert in der Glaskeramik erreicht wird,
- Schmelzen des Gemenges und
- Herstellen eines Glas-Vorprodukts, wie insbesondere einer Glasplatte, sowie
- Keramisieren des Glas-Vorprodukts, so dass ein Glaskeramik-Artikel erhalten wird.

Generell, nicht nur beschränkt auf diese Ausführungsform der Erfindung kann die Glasplatte vor oder während der Keramisierung verformt werden, so dass der Glaskeramik-Artikel nicht notwendigerweise plattenförmig oder durchgehend flach ist. Als Beispiel sei wiederum eine Glaskeramik-Platte für ein Kochfeld mit einer eingeformten Kuhle, die als Wok verwendet werden kann, genannt.

Die Erfindung wird nachfolgend anhand der beigeschlossenen Zeichnungen und mit Ausführungsbeispielen näher erläutert. Es zeigen:

Fig. 1 ein Glaskeramik-Kochfeld mit einer erfindungsgemäßen Glaskeramik-Platte,

Fig. 2 eine Variante des in Fig. 1 dargestellten Glaskeramik-Kochfelds,

Fig. 3 den spektralen Transmissionsgrad zweier Glaskeramiken als Funktion der Wellenlänge,

Fig. 4 den spektralen Transmissionsgrad der Ausgangsgläser der beiden Glaskeramiken,

Fig. 5 den spektralen Transmissionsgrad einer erfindungsgemäßen Glaskeramik vor und nach einem Hitzebelastungstest.

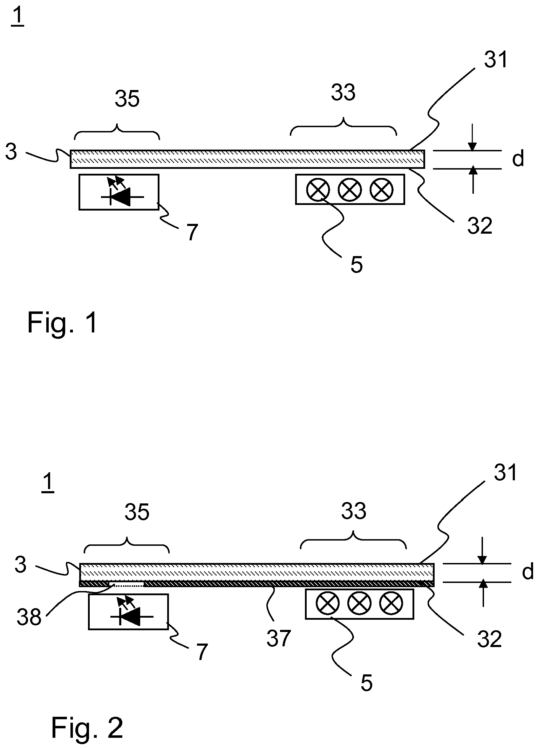

Die Erfindung eignet sich besonders für Glaskeramik-Kochfelder. Hierbei ist die Transmission der erfindungsgemäßen Glaskeramik so, dass eine sehr gute Sichtbarkeit und Farbwiedergabe für selbstleuchtende Anzeigeelemente erzielt wird. Fig. 1 zeigt dazu in seitlicher Ansicht ein schematisches Beispiel eines Glaskeramik-Kochfelds 1 mit einem erfindungsgemäßen Glaskeramikartikel in Form einer Glaskeramikplatte 3. Die Glaskeramikplatte 3 weist eine Oberseite 31 und eine Unterseite 32 auf. Unter der Unterseite 32 sind Heizelemente 5 angeordnet, um gegenüberliegend auf der Oberseite 31 in einer Kochzone 33 aufgestelltes Kochgeschirr oder gegebenenfalls direkt die zu kochenden oder garenden Speisen zu erhitzen. Die Glaskeramikplatte 3 weist eine Dicke d auf, die typischerweise in einem Bereich von 2 bis 6 Millimetern liegt.

Allgemein, ohne Beschränkung auf das dargestellte Beispiel kann nun auch unter dem Glaskeramikartikel, beziehungsweise der Glaskeramikplatte 3 zumindest ein selbstleuchtendes und durch die Glaskeramikplatte 3 hindurchleuchtendes Anzeigeelement 7 angeordnet sein, Durch die erfindungsgemäß verbesserte Transmission der Glaskeramikplatte 3 transmittiert diese nun insbesondere nicht nur rotes Licht in nennenswerter Intensität. Vielmehr können auch gelbe, grüne und blaue Spektralbereiche dargestellt werden. Demgemäß ist in Weiterbildung der Erfindung vorgesehen, dass das selbstleuchtende Anzeigeelement 7 eingerichtet ist, Licht im sichtbaren Spektralbereich mit Wellenlängen kleiner als 570 Nanometern, vorzugsweise kleiner als 510 Nanometern zu emittieren. Geeignet als Anzeigeelement ist beispielsweise eine Leuchtdioden-Anzeige. Entsprechend der Transmission im gelben, grünen und blauen Spektralbereich können dann auch im gelben, grünen oder blauen Spektralbereich emittierende Anzeigeelemente verwendet werden, beispielsweise entsprechend gelb, grün oder blau, sowie auch weiß leuchtende LEDs. Ebenso kann das Anzeigelement aus einem Farbdisplay bestehen, das eine Vielzahl von Anzeigen und Informationen für den Nutzer ermöglicht.

Das Anzeigeelement 7 kann beispielsweise wie dargestellt unter einem Anzeige- und/oder Bedienungsbereich 35 der Glaskeramikplatte 3 angeordnet sein. Auch eine Anordnung in der Kochzone 33 ist denkbar, beispielsweise, um optisch zu signalisieren, welche der Kochzonen gerade aktiv ist und heizt. Die Kochzone kann, anders als dargestellt, gemäß noch einem Ausführungsbeispiel auch gewölbt sein, um ein Gargefäß, wie etwa einen Wok zu bilden. Auch können die Ränder der Glaskeramik umgebogen sein.

Durch die weiter unten noch genauer erläuterten Eigenschaften der Glaskeramik sind dabei auch gelbe, grüne oder blaue spektrale Anteile des vom Anzeigeelement 7 emittierten Lichts durch die Glaskeramikplatte 3 hindurch für einen Betrachter sichtbar.

Fig. 2 zeigt eine Variante der in Fig. 1 dargestellten Ausführungsform. Aufgrund der vergleichsweise hohen Transmission der erfindungsgemäßen Glaskeramik kann es gegebenenfalls wünschenswert sein, die Transmission im sichtbaren Spektralbereich wieder zu erniedrigen. Zu diesem Zweck ist gemäß einer in Fig. 2 beispielhaft dargestellten Weiterbildung der Erfindung eine zumindest teilweise lichtblockende Beschichtung 37 auf der Unterseite 32 der Glaskeramikplatte 3 vorgesehen.

Die lichtblockende Beschichtung 37 ist vorzugsweise hitzebeständig ausgebildet. Dies ist zumindest dann sinnvoll, wenn sich, wie auch in Fig. 2 dargestellt, die lichtblockende Beschichtung 37 entlang der Kochzone 33 erstreckt.

Als lichtblockende Beschichtung 37 kommt sowohl eine lichtabsorbierende, als auch eine lichtreflektierende Beschichtung in Frage. Die lichtblockende Beschichtung 37 dient dazu, dass die unter der Glaskeramikplatte 3 angeordneten Komponenten des Kochfelds für einen Betrachter unsichtbar bleiben. Um das Design und die Ästhetik zu verändern, kann die lichtblockende Beschichtung 37 auch farblich variiert werden oder gemustert sein. Als lichtblockende Beschichtung 37 kommen organische oder anorganische Farbschichten, wie beispielsweise Lacke oder Emailschichten in Frage. Ebenso können auch metallisch oder interferenzoptisch reflektierende Beschichtungen verwendet werden. Reflektierende oder absorbierende Beschichtungen können weiterhin auch aus Metallverbindungen, wie Oxiden, Carbiden, Nitriden oder Mischverbindungen aus Oxiden, Carbiden, Nitriden aufgebaut werden. Auch kann gegebenenfalls eine Halbleiterbeschichtung, wie etwa eine Siliziumschicht als lichtblockende Beschichtung 37 eingesetzt werden.

Um die Anzeigefähigkeit nicht zu beeinträchtigen, ist gemäß noch einer Weiterbildung der Erfindung vorgesehen, dass die lichtblockende Beschichtung zumindest eine Aussparung 38 aufweist, wobei das unter der Glaskeramikplatte 3 angeordnete, selbstleuchtende Anzeigeelement 7 durch die Aussparung 38 hindurchleuchtet.

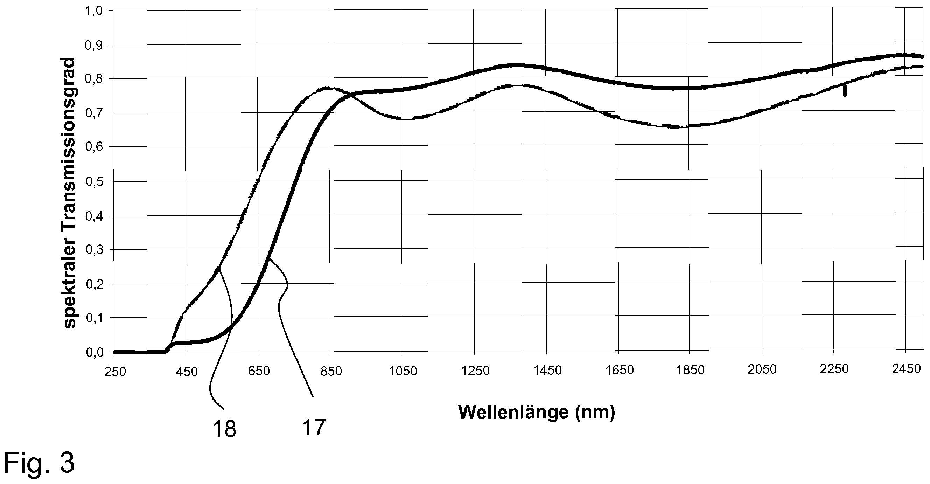

Fig. 3 zeigt nun zum Vergleich die spektralen Transmissionsverläufe 17, 18 zweier Glaskeramiken. Zur Messung wurden Glaskeramikplatten mit einer Dicke von 3 Millimetern verwendet, die senkrecht zur Oberfläche durchstrahlt wurden.

Der mit dem Bezugszeichen 17 bezeichnete Transmissionsverlauf wurde dabei an einer Glaskeramik mit niedrigem Eisenoxid-Gehalt gemessen. Der Transmissionsverlauf 18 hingegen wurde an einer erfindungsgemäßen Glaskeramik gemessen, die einen $Fe_2O_3$-Gehalt von mehr als 0,1 Gewichtsprozent aufweist, der auch höher als der Vanadinoxid-Gehalt ist. Dabei ist der Vanadinoxid-Gehalt bei beiden Proben gleich.

Im Speziellen weisen beide Glaskeramiken zu den Transmissionsverläufen 17, 18 übereinstimmend folgende Zusammensetzung in Gewichtsprozent auf:

$SiO_2$ 65,14
$Al_2O_3$ 20, 9
$Li_2O$ 3,71
$Na_2O$ 0,59

K$_2$O 0,22
MgO 0,37
ZnO 1,5
CaO 0,42
BaO 2,3
TiO$_2$ 3,1
ZrO$_2$ 1,34
SnO$_2$ 0,24
V$_2$O$_5$ 0,026
MnO$_2$ 0,025

Die beiden Glaskeramiken unterscheiden sich nur im Gehalt an Eisenoxid. Bei der Glaskeramik zu Transmissionsverlauf 17 beträgt der Fe$_2$O$_3$-Gehalt 0,093 Gewichtsprozent. Demgegenüber liegt der Fe$_2$O$_3$-Gehalt der erfindungsgemäßen Glaskeramikplatte mit dem Transmissionsverlauf 18 bei 0,2 Gewichtsprozent. Der Gehalt ist damit, wie erfindungsgemäß vorgesehen, einerseits größer als 0,1 Gewichtsprozent und andererseits um einen Faktor 7,7 größer als der Gehalt von Vanadinoxid, V$_2$O$_5$. Auch der Gehalt an Titanoxid ist geringer als die bevorzugte Obergrenze von 3,9 Gewichtsprozent oder weniger.

Die Referenzglaskeramiken haben eine Zusammensetzung die im Wesentlichen besteht aus den Komponenten in Gew.% auf Oxidbasis

| | |
|---|---|
| Li$_2$O | 3,0 - 5,0 |
| $\sum$ Na$_2$O+K$_2$O | 0,2 - 1,5 |
| MgO | 0 - 2 |
| $\sum$ CaO+SrO+BaO | 0 - 4 |
| ZnO | 0 - 3 |
| B$_2$O$_3$ | 0 - 2 |
| Al$_2$O$_3$ | 18 - 25 |
| SiO$_2$ | 55 - 75 |
| TiO$_2$ | 1 - 5 |
| ZrO$_2$ | 0 - 2 |
| P$_2$O$_5$ | 0 - 3 |
| SnO$_2$ | 0,15 - 0,5 |
| $\sum$ TiO$_2$+ZrO$_2$+SnO$_2$ | 3,8 - 6 |
| V$_2$O$_5$ | 0,005 - 0,05 |
| Fe$_2$O$_3$+CeO$_2$ | 0,1 - 0,6 |

Weiterhin ist auch die weiter oben aufgeführte Bedingung (M(SnO$_2$) + 0,1* M(TiO$_2$)) / (M(Fe$_2$O$_3$) + M(CeO$_2$))< 3 erfüllt. Das Verhältnis der Gewichtsanteile dieser Komponenten hat bei dieser Glaskeramik einen Wert von 2,75.

Wie anhand des Diagrams der Fig. 3 ersichtlich ist, reduziert das Eisenoxid die Absorption des Vanadinoxids im sichtbaren Spektralbereich, insbesondere zwischen 750 und 450 Nanometern, so dass auch bei einem hohen Vanadinoxid-Gehalt von mehr als 0,02 Gewichtsprozent, sogar bei mehr als 0,025 Gewichtsprozent eine Transmission von mehr als 2,5%, sogar von mehr als 5% im sichtbaren Spektralbereich zwischen 450 und 750 Nanometern erreicht wird. Im Speziellen wurde an einer 3 Millimeter dicken Probe eine mit Normlicht C gemessene Transmission im sichtbaren, entsprechend dem Farbwert Y von 28,5% gemessen. Für die Normlichtart A wurde weiterhin eine Lichttransmission im sichtbaren Spektralbereich von 31,5% gemessen. Bei Messung der sichtbaren Transmission mit Normlichtart D65 ergab sich eine Lichttransmission von Y=28,4%.

Anhand von Fig. 3 wird ein weiterer besonderer Effekt welcher die Entfärbung des Vanadinoxids durch einen bestimmten Fe$_2$O$_3$-Gehalt mit sich bringt, ersichtlich.

Die Entfärbung wirkt auf die Absorption im kurzwelligen sichtbaren Spektralbereich offensichtlich verhältnismäßig stärker als im langwelligeren sichtbaren Spektralbereich. Dies führt dazu, dass der Transmissionsverlauf deutlich linearer wird, als bei der Vergleichsprobe mit geringerem Fe$_2$O$_3$-Gehalt.

Wird mittels der Methode der kleinsten Quadrate jeweils eine Gerade im Wellenlängenbereich zwischen 450 und 700 Nanometern angefittet, so weist bei der erfindungsgemäßen Glaskeramik das Bestimmtheitsmaß R$^2$ der Transmissionskurve 18 einen Wert von 0,9857 auf. Die Transmissionskurve 17 der Vergleichsprobe zeigt demgegenüber einen deutlich geringeren Wert von 0,861. Das Bestimmtheitsmaß R$^2$ ist gegeben durch:

$$(1) \quad R^2 = 1 - \frac{\sum_{i=1}^{n}\left(Y_i - \hat{Y}_i\right)^2}{\sum_{i=1}^{n}\left(Y_i - \overline{Y}\right)^2}$$

In dieser Beziehung bezeichnen die Werte $Y_i$ die Transmissionsmesswerte bei den verschiedenen Wellenlängen, $\hat{Y}_i$ die entsprechenden Werte der an die Messwerte angepassten Geraden bei der jeweiligen, zu $Y_i$ korrespondierenden Wellenlänge und $\overline{Y}$ den Mittelwert der Werte $Y_i$. Der Index i nummeriert die einzelnen Transmissionsmesswerte $Y_i$ bis zum größten Wert n durch.

Das Bestimmtheitsmaß nimmt je nach linearer Korrelation der Messwerte einen Wert zwischen null (keine lineare Korrelation) und eins (perfekte lineare Korrelation der Meßwerte) an. Das Bestimmtheitsmaß von 0,9857 zeigt daher, dass der Transmissionsverlauf hochgradig linear ist.

Dieser Effekt ist insbesondere auch in den gelben bis blauen Spektralbereichen vorhanden. Für ein Wellenlängenintervall von 450 bis 600 Nanometern ergibt sich für die erfindungsgemäße Glaskeramik ein ähnlich hohes Bestimmtheitsmaß $R^2$ von 0,9829, während das Bestimmtheitsmaß bei der Vergleichsprobe nur bei 0,8589 liegt. Allgemein kann, wie anhand dieses Beispiels gezeigt wurde, Eisenoxid so zum Gemenge hinzudosiert werden, beziehungsweise die Gehalte von $Fe_2O_3$ und $V_2O_5$ so ins Verhältnis gesetzt sein, dass bei gegebenem Vanadinoxidgehalt der spektrale Transmissionsverlauf in einem Wellenlängenbereich zwischen 450 und 600 Nanometern so linear wird, dass sich für eine an den Transmissionsverlauf der Glaskeramik mit der Methode der kleinsten Quadrate angepasste Gerade ein Bestimmtheitsmaß $R^2$ von mehr als 0,9, vorzugsweise mehr als 0,95 ergibt.

Dieses Merkmal ist besonders für die Verwendung farbiger Anzeigen von Vorteil. Sofern ein oder mehrere selbstleuchtende Anzeigeelemente Licht verschiedener Wellenlängen emittieren, erlaubt der annähernd lineare Transmissionsverlauf hier eine einfachere Anpassung der Anzeigeelemente für eine farbgetreue Wiedergabe.

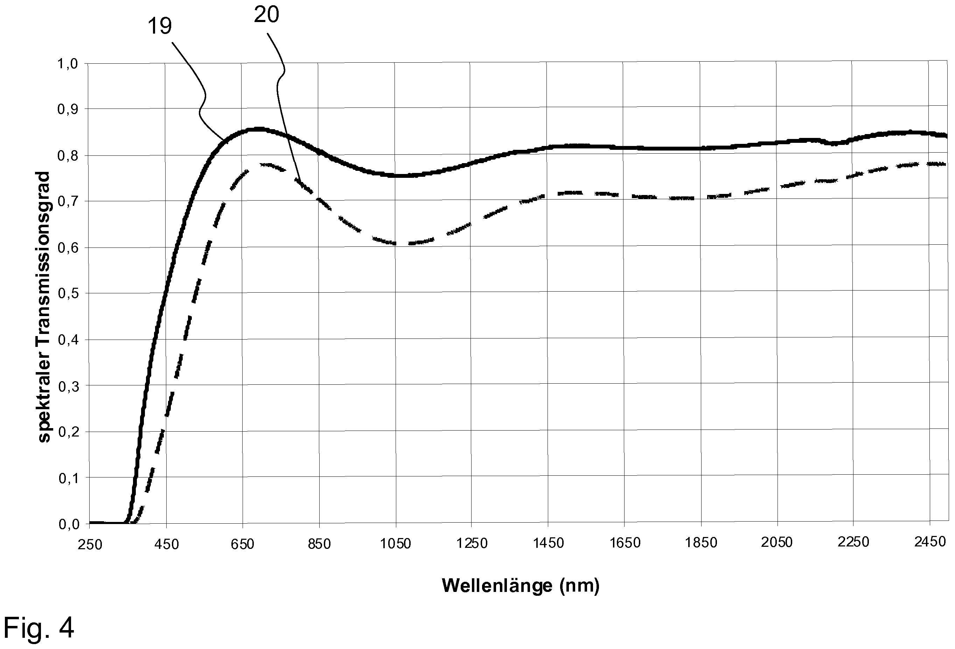

Sowohl die Färbung des Vanadinoxids, sowie auch die Entfärbung durch das Eisenoxid treten im Wesentlichen erst bei der Keramisierung des Ausgangsglases auf. Fig. 4 zeigt dazu im Vergleich zu Fig. 3 zwei Transmissionskurven der Ausgangsgläser beider Proben. Die Messungen der Fig. 4 wurden im Unterschied zu den Daten der Fig. 3 an 4 Millimeter dicken Proben durchgeführt. Die Transmissionskurve 19 wurde am Ausgangsglas der Vergleichsprobe, die Transmissionskurve 20 am Ausgangsglas der erfindungsgemäßen Glaskeramik gemessen. Aufgrund des höheren $Fe_2O_3$-Gehalts der erfindungsgemäßen Glaskeramik ist hier der spektrale Transmissionsgrad durchgehend niedriger. Zwar ergibt sich, wie anhand von Fig. 3 ersichtlich, durch das Eisenoxid auch bei der keramisierten Probe eine niedrigere Transmission im Infrarotbereich, dafür ist die Transmission im sichtbaren höher.

Die Transmission im sichtbaren Spektralbereich, beziehungsweise der Y-Wert sind auch abhängig von der Dicke der Glaskeramikplatte. Bei dem Beispiel der Fig. 3 betrug die Dicke wie gesagt 3 Millimeter. Würde eine dickere, beispielsweise 4 Millimeter dicke Platte verwendet, so sinkt bei der gleichen Zusammensetzung des Ausgangsglases wiederum die Transmission. Der Vanadinoxid-Gehalt kann daher auch vorteilhaft in Abhängigkeit der Plattendicke eingestellt werden. Im Speziellen ist in Weiterbildung der Erfindung vorgesehen, dass der Vanadinoxid-Gehalt zumindest 0,066/x Gewichtsprozent beträgt, wobei x die Dicke der Glaskeramik in Millimetern bezeichnet.

Entsprechend kann auch der Eisenoxid-Gehalt in Abhängigkeit von der Plattendicke eingestellt werden, um bestimmte Transmissionwerte unabhängig von der Plattendicke zu erzielen. Gemäß noch einer Weiterbildung der Erfindung ist daher vorgesehen, dass der Eisenoxid-Gehalt zumindest 0,4/x Gewichtsprozent beträgt, wobei x die Dicke der Glaskeramik in Millimetern bezeichnet.

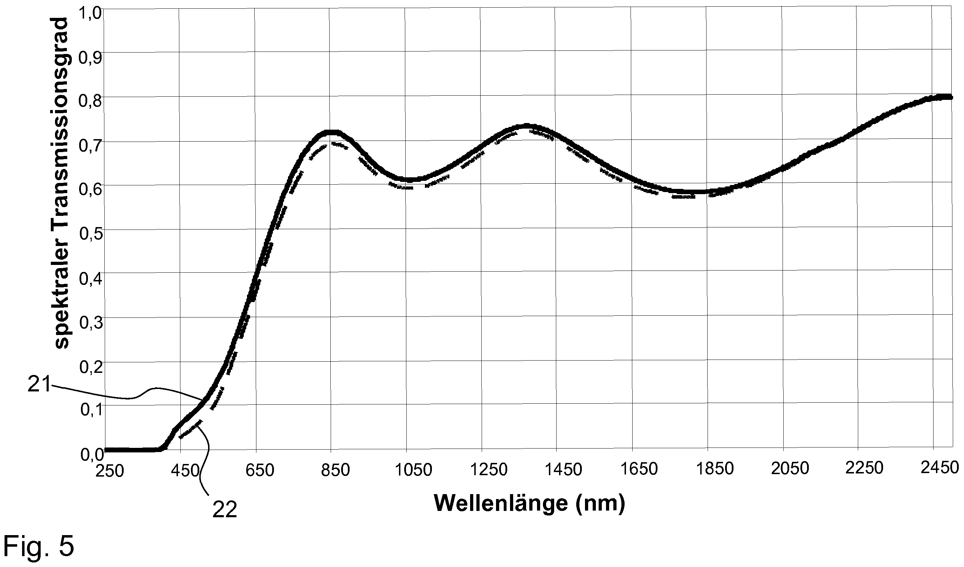

Die erfindungsgemäßen Glaskeramikplatten erweisen sich hinsichtlich der Färbung und Absorption auch als zu üblichen Glaskeramiken vergleichbar standfest unter extremen Betriebsbedingungen eines Glaskeramik-Kochfelds. Fig. 5 zeigt dazu zwei Transmissionskurven 21, 22, die beide an der erfindungsgemäßen Glaskeramik, die auch den Beispielen der Fig. 3 und 4 zu Grunde liegt, gemessen wurde. Dementsprechend weist die Glaskeramik einen $Fe_2O_3$-Anteil von 0,2 Gewichtsprozent auf. Aus der Glaskeramik wurde eine ca. 4 Millimeter dicke Probe präpariert und an dieser Probe die Transmissionskurve 21 gemessen.

Es wurde dann eine Nachtemperung bei 800°C für eine Dauer von 10 Stunden vorgenommen und dann die Transmissionskurve 22 gemessen. Die Transmission im sichtbaren Spektralbereich liegt demnach nach der Temperung noch bei 78 % des Ausgangswert bei der Lichttransmission Y. Zwar sinkt die Transmission, allerdings liegt die prozentuale Absenkung der Transmission im Bereich dessen, was auch an anderen volumengefärbten LAS-Glaskeramiken ermittelt wird. Absolut gesehen bleibt die Transmission im sichtbaren Spektralbereich insbesondere auch deutlich höher, als bei der Vergleichsprobe mit niedrigerem $Fe_2O_3$-Gehalt von weniger als 0,1 Gewichtsprozent.

Der Einfluss von Eisenoxid und Zinnoxid auf die Transmission der Glaskeramik kann außerdem gut anhand der in der nachfolgenden Tabelle aufgelisteten Ausführungsbeispiele (Beispiele 1-5 sind Vergleichsbeispiele) belegt werden:

| Probe | 1 | 2 | 3 | 4 | 5 | 6 | 7 | 8 |
|---|---|---|---|---|---|---|---|---|
| Komponente | [ppm] | [ppm] | [ppm] | [ppm] | [ppm] | [ppm] | [ppm] | [ppm] |
| CoO | 0 | 0 | 0 | 0 | 0 | 0 | 0 | 0 |
| NiO | 0 | 0 | 0 | 0 | 0 | 0 | 0 | 0 |
| Cr2O3 | 0 | 0 | 0 | 0 | 0 | 0 | 0 | 0 |
| Nd2O3 | 0 | 0 | 0 | 0 | 0 | 0 | 0 | 0 |
| Er2O3 | 0 | 0 | 0 | 0 | 0 | 0 | 0 | 0 |
| MnO2 | 1 | 1 | 1 | 1 | 1 | 1 | 1 | 1 |
| Fe2O3 | **100** | **500** | **750** | **1250** | **1500** | **2000** | **2500** | **3000** |
| TiO2 | 31000 | 31000 | 31000 | 31000 | 31000 | 31000 | 31000 | 31000 |
| SnO2 | 2500 | 2500 | 2500 | 2500 | 2500 | 2500 | 2500 | 2500 |
| V2O5 | **220** | **220** | **220** | **220** | **220** | **220** | **220** | **220** |
| ZrO2 | 13248 | 13248 | 13248 | 13248 | 13248 | 13248 | 13248 | 13248 |
| | | | | | | | | |
| | | | | | | | | |
| | | | | | | | | |
| (Sn+0.1Ti)/Fe | 56,00 | 11,20 | 7,47 | 4,48 | 3,73 | 2,80 | 2,24 | 1,87 |
| Fe/V (5-30) | 0,45 | 2,27 | 3,41 | 5,68 | 6,82 | 9,09 | 11,36 | 13,64 |
| | | | | | | | | |
| Y (4mm) | 1,89 | 2,1 | 2,25 | 2,58 | 2,77 | 3,17 | 3,64 | 4,17 |

Die Dicke der Proben beträgt 4 mm. Die Grundzusammensetzung der Proben 1 bis 8 entspricht im Wesentlichen der in der Beschreibung zu Fig. 3 angegebenen Zusammensetzung mit 65,14 Gewichtsprozent $SiO_2$ und 20,9 Gewichtsprozent $Al_2O_3$. Der Vanadinoxid-Gehalt ist mit 220 ppm (0,02 Gew%) etwas geringer, als bei den Beispielen der Fig. 3 (260 ppm), der $SnO_2$-Gehalt mit 2500 ppm statt 2400 ppm geringfügig höher. Wie anhand der Tabelle ersichtlich, wurde mit steigender Probennummer der Eisenoxid-Gehalt von 100 ppm bis 3000 ppm sukzessive erhöht.

Bei den Proben 1 bis 3 ist der Eisenoxid-Gehalt noch niedriger als 1000 ppm, bei Probe 4 wird mit 1250 ppm ein $Fe_2O_3$-Gehalt von mehr als 1000 ppm erreicht. Während bei den Vergleichsbeispielen der Proben 1 bis 3 die Transmission (angegeben als Y-Farbwert) noch bei unter 2,5% liegt, wird dieser Wert bei Probe 4 überschritten. Die Transmission steigt auch tatsächlich mit steigendem $Fe_2O_3$-Gehalt weiter deutlich an, wie anhand der Transmissionswerte der Proben 4 bis 8 ersichtlich ist, wobei bei einem $Fe_2O_3$-Gehalt von 3000 ppm bei der gegebenen Plattendicke von 4 Millimetern eine Transmission im sichtbaren Spektralbereich von 4,17% erreicht wird.

Die weitere Bedingung, dass das Verhältnis der Komponenten $(M(SnO_2) + 0{,}1 * M(TiO_2)) / (M(Fe_2O_3) + M(CeO_2))$ < 3 (angegeben in der Tabelle als (Sn+0.1Ti)/Fe) in Gewichtsprozent kleiner als 3 ist, wird von allen erfindungsgemäßen Proben 6 bis 8 erreicht. Bei den Proben 6 bis 8 liegt das Verhältnis bei unter drei.

Auch ist bei allen Proben 4 bis 8 das Verhältnis der Gewichtsanteile $Fe_2O_3/V_2O_5$ (in der Tabelle abgekürzt geschrieben als Fe/V) zwischen 5 und 20, wie bevorzugt erfindungsgemäß vorgesehen, während bei den Proben 1 bis 3 der Wert dieses Verhältnisses kleiner als 5 ist.

Anhand dieser Beispiele wird ersichtlich, dass die Transmission eines Glaskeramikartikels mit gegebener Vanadinoxid-haltiger Zusammensetzung durch Hinzudosieren von Eisenoxid in einfacher Weise eine vorbestimmte Transmission eingestellt werden kann. Der Transmissionswert ist selbstverständlich auch von der Dicke des Glaskeramik-Artikels abhängig. Wird eine niedrigere Dicke als die 4 Millimeter des Beispiels hergestellt, reicht für einen bestimmten Transmissionswert dann eine geringere Menge von Eisenoxid. Um einen Glaskeramik-Artikel, wie insbesondere ein Glaskeramik-Kochfeld mit vorbestimmter Transmission herzustellen, wird also zunächst ein Transmissionswert von 2,5% oder mehr im sichtbaren Spektralbereich festgelegt, wobei der Transmissionswert höher liegt, als der Transmissionswert einer aus demselben Vanadinoxid-haltigen Gemenge, jedoch mit einem Eisenoxid-Gehalt von weniger als 0,1 Gewichtsprozent hergestellten Glaskeramik. Dann wird Eisenoxid der Schmelze oder dem zu schmelzenden Gemenge in einer Menge zugegeben, welche die Absorption des Vanadinoxids im sichtbaren Spektralbereich so weit aufhebt, dass der festgelegte Transmissionswert in der Glaskeramik bei der vorgesehenen Dicke des Glaskeramikartikels erreicht wird.

Auch $CeO_2$ ist sehr effektiv als Entfärbemittel für $V_2O_5$-haltige Glaskeramiken, wie das folgende Referenzbeispiel zeigt. Es wurden zwei Lithium-Aluminosilikat-Glaskeramikproben ähnlicher Zusammensetzung hergestellt, von denen die Vergleichsprobe einen $V_2O_5$-Gehalt von 0,2 Gewichtsprozent aufweist. Bei der erfindungsgemäßen Probe wurde mit 0,4 Gewichtsprozent ein doppelt so hoher $V_2O_5$-Gehalt vorgesehen. Wird zu diesem Gemenge noch 0,5 Gewichtsprozent $CeO_2$ hinzugegeben, so bleibt die Transmission fast gleich hoch, obwohl $V_2O_5$ wie oben bereits gesagt ein sehr stark färbendes, beziehungsweise im sichtbaren Spektralbereich stark absorbierendes Färbemittel ist. Mit anderen Worten kompensiert die Zugabe von $CeO_2$ eine Verdoppelung des $V_2O_5$-Gehalts hinsichtlich der Transmission im sichtbaren Spektralbereich.

Die Gemenge der Referenzprobe und der Vergleichsprobe weisen folgende Zusammensetzungen auf:

| Komponente: | Vergleichsprobe: | Referenzprobe: |
|---|---|---|
| $Al_2O_3$ | 22,47 | 22,21 |
| $K_2O$ | 0,20 | 0,20 |
| $Li_2O$ | 4,08 | 4,00 |
| MgO | 1,00 | 0, 98 |
| $Na_2O$ | 0,64 | 0, 64 |
| $P_2O_5$ | 1,33 | 1,32 |
| $SiO_2$ | 65,84 | 65,35 |
| $SnO_2$ | 0,44 | 0,40 |
| $TiO_2$ | 1,80 | 1,80 |
| $V_2O_5$ | 0,20 | 0,41 |
| ZnO | 0,20 | 0,20 |
| $ZrO_2$ | 2,00 | 2,00 |
| ZnO | 0,00 | 0,20 |
| $CeO_2$ | 0,00 | 0,50 |

In einer Offenbarung soll der $CeO_2$-Gehalt höchstens 0,6 Gew.% sein. Höhere Gehalte sind angesichts der nachlassenden Effekts unwirtschaftlich.

Die Lichttransmission der keramisierten Proben im sichtbaren Spektralbereich ist bei einer 4 mm dicken Vergleichsprobe 1,2%, bei der mit $CeO_2$ entfärbten Probe noch 1,1%. Bei einer Wellenlänge von 600 Nanometern ist die Transmission der Vergleichsprobe 2,49 %. Die Transmission der mit CeO2 entfärbten Probe ist mit 2,44 % praktisch gleich groß.

## Patentansprüche

1. Lithium-Aluminosilikat-Glaskeramikartikel, insbesondere Glaskeramikplatte (3), welche Vanadinoxid als färbenden Bestandteil zu mindestens 0,005, vorzugsweise mindestens 0,01 Gewichtsprozent, besonders bevorzugt bis 0,05 Gewichtsprozent aufweist, wobei der Gehalt von Zinnoxid weniger als 0,5 Gewichtsprozent beträgt, und wobei die Glaskeramik als weiteren Bestandteil Eisenoxid mit einem Anteil von mehr als 0,1 Gewichtsprozent als Entfärbemittel enthält, wobei der Eisenoxid-Gehalt mindestens so groß oder größer als der Vanadinoxidgehalt ist, wobei die Lichttransmission des Glaskeramikartikels im sichtbaren Spektralbereich bei Beleuchtung senkrecht zur Oberfläche des Glaskeramikartikels mehr als 2,5 % beträgt, und wobei in der Zusammensetzung der Glaskeramik die Gehalte von Zinnoxid, Titanoxid und Eisenoxid die Beziehung $(M(SnO_2) + 0,1* M(TiO_2)) / (M(Fe_2O_3) + M(CeO_2)) < 3$ erfüllen, wobei M jeweils den Anteil der in der nachstehenden Klammer genannten Komponente in Gewichtsprozent bezeichnet.

2. Lithium-Aluminosilikat-Glaskeramikartikel gemäß dem vorstehenden Anspruch, wobei der Vanadinoxid-Gehalt zumindest 0,066/x Gewichtsprozent beträgt, wobei x die Dicke der Glaskeramik in Millimetern bezeichnet.

3. Lithium-Aluminosilikat-Glaskeramikartikel gemäß einem der beiden vorstehenden Ansprüche, wobei der Eisenoxid-Gehalt zumindest 0,4/x Gewichtsprozent beträgt, wobei x die Dicke der Glaskeramik in Millimetern bezeichnet.

**4.** Lithium-Aluminosilikat-Glaskeramikartikel gemäß einem der vorstehenden Ansprüche, wobei die Glaskeramik-Platte eine Dicke im Bereich von 2,5 bis 7 Millimetern aufweist.

**5.** Lithium-Aluminosilikat-Glaskeramikartikel gemäß einem der vorstehenden Ansprüche, **dadurch gekennzeichnet, dass** die Glaskeramik einen Gehalt von Zinnoxid im Bereich von 0,15 bis 0,5 Gewichtsprozent, bevorzugt im Bereich von 0,2 bis 0,45 Gewichtsprozent aufweist.

**6.** Lithium-Aluminosilikat-Glaskeramikartikel gemäß dem vorstehenden Anspruch, **dadurch gekennzeichnet, dass** die Glaskeramik einen Gehalt von Titanoxid von weniger als 5 Gewichtsprozent, vorzugsweise im Bereich von 2,5 bis 5 Gewichtsprozent, besonders bevorzugt bis 3,9 Gewichtsprozent aufweist.

**7.** Lithium-Aluminosilikat-Glaskeramikartikel gemäß einem der vorstehenden Ansprüche, **dadurch gekennzeichnet, dass** die Gehalte von $Fe_2O_3$ und $V_2O_5$ so in einem Verhältnis stehen, dass sich für eine an den Transmissionsverlauf der Glaskeramik mit der Methode der kleinsten Quadrate angepasste Gerade im Wellenlängenbereich zwischen 450 und 600 Nanometern ein Bestimmtheitsmaß $R^2$ von mehr als 0,9, vorzugsweise mehr als 0,95 ergibt.

**8.** Lithium-Aluminosilikat-Glaskeramikartikel gemäß einem der vorstehenden Ansprüche, **dadurch gekennzeichnet, dass** der Gewichtsanteil von Eisenoxid an dem Lithium-Aluminosilikat-Glaskeramikartikel zwischen einem Faktor von 5 bis zu einem Faktor von 20 größer ist als der Gewichtsanteil von Vanadinoxid.

**9.** Lithium-Aluminosilikat-Glaskeramikartikel gemäß einem der vorstehenden Ansprüche, **dadurch gekennzeichnet, dass** der Gewichtsanteil an Chrom oder Chromoxid kleiner als 0,01%, vorzugsweise kleiner als 0,005%, ist.

**10.** Glaskeramik-Kochfeld (1) mit einem Lithium-Aluminosilikat-Glaskeramikartikel gemäß einem der vorstehenden Ansprüche, vorzugsweise mit einem Lithium-Aluminosilikat-Glaskeramikartikel in Form einer Aluminosilikat-Glaskeramikplatte (3).

**11.** Glaskeramik-Kochfeld (1) gemäß dem vorstehenden Anspruch, **dadurch gekennzeichnet, dass** unter dem Glaskeramikartikel zumindest ein selbstleuchtendes und durch den Glaskeramikartikel hindurchleuchtendes Anzeigeelement (7) angeordnet ist, wobei das selbstleuchtende Anzeigeelement (7) eingerichtet ist, Licht im sichtbaren Spektralbereich mit Wellenlängen kleiner als 570 Nanometern, vorzugsweise kleiner als 510 Nanometern zu emittieren.

**12.** Glaskeramik-Kochfeld (1) gemäß einem der beiden vorstehenden Ansprüche, **gekennzeichnet durch** eine zumindest teilweise lichtblockende Beschichtung (37) auf der Unterseite (32) des Glaskeramikartikels,

**13.** Glaskeramik-Kochfeld gemäß dem vorstehenden Anspruch, **dadurch gekennzeichnet, dass** die lichtblockende Beschichtung zumindest eine Aussparung (38) aufweist, wobei zumindest ein selbstleuchtendes Anzeigeelement (7) vorgesehen ist, welches unter dem Glaskeramikartikel angeordnet ist und durch die Aussparung (38) hindurchleuchtet.

**14.** Verfahren zur Herstellung eines Glaskeramik-Artikels gemäß einem der Ansprüche 1 bis 9 mit folgenden Schritten:

- Herstellen eines Gemenges für Lithium-Aluminosilikat-Glaskeramiken, wobei das Gemenge Vanadinoxid zu mindestens 0,005, vorzugsweise mindestens 0,01, besonders bevorzugt bis 0,05 Gewichtsprozent und Zinnoxid zu weniger als 0,5 Gewichtsprozent aufweist,
- Festlegen eines Transmissionswertes von 2,5% oder mehr im sichtbaren Spektralbereich, wobei der Transmissionswert höher liegt, als der Transmissionswert einer aus demselben Vanadinoxid-haltigen Gemenge, jedoch mit einem Eisenoxid-Gehalt von weniger als 0,1 Gewichtsprozent hergestellten Glaskeramik,
- Zugeben von Eisenoxid als Entfärbemittel in einer Menge, welche die Absorption des Vanadinoxids im sichtbaren Spektralbereich so weit aufhebt, dass der festgelegte Transmissionswert in der Glaskeramik erreicht wird,
- Schmelzen des Gemenges und
- Herstellen eines Glas-Vorprodukts, sowie
- Keramisieren des Glas-Vorprodukts, so dass ein Glaskeramik-Artikel erhalten wird.

**Claims**

1. A lithium aluminosilicate glass ceramic article, in particular a glass ceramic panel (3), including at least 0.005, preferably at least 0.01 percent by weight, more preferably up to 0.05 percent by weight of vanadium oxide as a colour-imparting component, wherein a content of tin oxide is less than 0.5 percent by weight, and wherein the glass ceramic includes, as a further component, iron oxide in a proportion of more than 0,1 percent by weight as a decolouring agent, wherein the iron oxide content is at least the same or greater than the vanadium oxide content; wherein light transmittance of the glass ceramic article in the visible spectral range when illuminated perpendicular to the surface of the glass ceramic article is greater than 2.5 %, and wherein in the composition of the glass ceramic article the contents of tin oxide, titanium oxide, and iron oxide meet the relationship

   $(M(SnO_2) + 0.1 * M(TiO_2)) / (M(Fe_2O_3) + M(CeO_2)) < 3$, wherein M is the respective proportion, in percent by weight, of the component in the following brackets.

2. The lithium aluminosilicate glass ceramic article according to the preceding claim, wherein the vanadium oxide content is at least $0.066/x$ percent by weight, wherein x is the thickness of the glass ceramic in millimeters.

3. The lithium aluminosilicate glass ceramic article according to any one of the two preceding claims, wherein the iron oxide content is at least $0.4/x$ percent by weight, wherein x is the thickness of the glass ceramic in millimeters.

4. The lithium aluminosilicate glass ceramic article according to any one of the preceding claims, wherein the glass ceramic panel has a thickness in a range from 2.5 to 7 millimeters.

5. The lithium aluminosilicate glass ceramic article according to any one of the preceding claims, **characterised in that** the glass ceramic has a content of tin oxide in a range from 0.15 to 0.5 percent by weight, preferably in a range from 0.2 to 0.45 percent by weight.

6. The lithium aluminosilicate glass ceramic article according to the preceding claim, **characterised in that** the glass ceramic article has a content of titanium oxide of less than 5 percent by weight, preferably in a range from 2.5 to 5 percent by weight, most preferably of up to 3.9 percent by weight.

7. The lithium aluminosilicate glass ceramic article according to any one of the preceding claims, **characterised in that** a ratio of the contents of $Fe_2O_3$ and $V_2O_5$ is such that in a range of wavelengths between 450 and 600 nanometres a coefficient of determination $R^2$ of more than 0.9, preferably more than 0.95 is resulting for a straight line fitted to the transmittance characteristic of the glass ceramic using the method of least squares.

8. The lithium aluminosilicate glass ceramic article according to any one of the preceding claims, **characterised in that** the weight fraction of iron oxide in the lithium aluminosilicate glass ceramic article is greater than the weight fraction of vanadium oxide by a factor of 5 up to a factor of 20.

9. The lithium aluminosilicate glass ceramic article according to any one of the preceding claims, **characterised in that** the weight fraction of chromium or chromium oxide is less than 0.01 %, preferably less than 0.005 %.

10. A glass ceramic cooktop (1) comprising a lithium aluminosilicate glass ceramic article according to any one of the preceding claims, preferably comprising a lithium aluminosilicate glass ceramic article in the form of an aluminosilicate glass ceramic panel (3).

11. The glass ceramic cooktop (1) according to the preceding claim, **characterised in that** at least one self-luminous display element (7) is arranged below the glass ceramic article and shines through the glass ceramic article, wherein the self-luminous display element (7) is adapted to emit light in the visible spectral range with wavelengths of less than 570 nanometres, preferably less than 510 nanometres.

12. The glass ceramic cooktop (1) according to any one of the preceding claims, **characterised by** an at least partially light-blocking coating (37) on the lower surface (32) of the glass ceramic article.

13. The glass ceramic cooktop according to the preceding claim, **characterised in that** the light-blocking coating has at least one recess (38), wherein at least one self-luminous display element (7) is provided which is arranged below the glass ceramic article and shines through the recess (38).

**14.** A method for producing a glass ceramic article according to any one of claims 1 to 9, comprising the steps of:

- preparing a batch for lithium aluminosilicate glass ceramics, wherein the batch comprises at least 0,005 percent by weight of vanadium oxide, preferably at least 0.01, most preferably up to 0.05 percent by weight of vanadium oxide, and less than 0,5 percent by weight of tin oxide;
- predefining a transmittance value of 2.5 % or more in the visible spectral range, said transmittance value being higher than the transmittance value of a glass ceramic produced from the same vanadium oxide containing batch but with an iron oxide content of less than 0.1 percent by weight;
- adding iron oxide as a decolouring agent in an amount which neutralizes the absorption caused by the vanadium oxide in the visible spectral range to such an extent that the predefined transmittance value is obtained in the glass ceramic;
- melting the batch; and
- producing a glass precursor; and
- ceramizing the glass precursor, so that a glass ceramic article is obtained.

## Revendications

**1.** Article vitrocéramique en aluminosilicate de lithium, en particulier plaque vitrocéramique (3), laquelle présente de l'oxyde de vanadium en tant que constituant colorant à raison d'au moins 0,005, de préférence d'au moins 0,01 pourcent en poids, de manière particulièrement préférée jusqu'à 0,05 pourcent en poids, dans lequel la teneur en oxyde d'étain est inférieure à 0,5 pourcent en poids, et dans lequel la vitrocéramique contient en tant qu'autre constituant de l'oxyde de fer avec une part de plus de 0,1 pourcent en poids en tant que décolorant, dans lequel la teneur en oxyde de fer est au moins aussi élevée ou plus élevée que la teneur en oxyde de vanadium, dans lequel la transmission lumineuse de l'article vitrocéramique dans le domaine spectral visible lorsque l'éclairage est perpendiculaire à la surface de l'article vitrocéramique est supérieure à 2,5 %, et dans lequel les teneurs en oxyde d'étain, en oxyde de titane et en oxyde de fer dans la composition de la vitrocéramique satisfont à la relation

$(M(S_n)O_2) + 0{,}1 * M(TiO_2)) / (M(Fe_2O_3) + M(CeO_2)) < 3$, où M indique en pourcentage en poids respectivement la part du composant cité dans la parenthèse qui suit M.

**2.** Article vitrocéramique en aluminosilicate de lithium selon la revendication précédente, dans lequel la teneur en oxyde de vanadium atteint au moins 0,066/x pourcent en poids, où x indique l'épaisseur de la vitrocéramique en millimètres.

**3.** Article vitrocéramique en aluminosilicate de lithium selon l'une des deux revendications précédentes, dans lequel la teneur en oxyde de fer atteint au moins 0,4/x pourcent en poids, où x indique l'épaisseur de la vitrocéramique en millimètres.

**4.** Article vitrocéramique en aluminosilicate de lithium selon l'une quelconque des revendications précédentes, dans lequel la plaque vitrocéramique présente une épaisseur dans la plage de 2,5 à 7 millimètres.

**5.** Article vitrocéramique en aluminosilicate de lithium selon l'une quelconque des revendications précédentes, **caractérisé en ce que** la vitrocéramique présente une teneur en oxyde d'étain dans la plage de 0,15 à 0,5 pourcent en poids, de préférence dans la plage de 0,2 à 0,45 pourcent en poids.

**6.** Article vitrocéramique en aluminosilicate de lithium selon la revendication précédente, **caractérisé en ce que** la vitrocéramique présente une teneur en oxyde de titane inférieure à 5 pourcent en poids, de préférence dans la plage de 2,5 à 5 pourcent en poids, de manière particulièrement préférée jusqu'à 3,9 pourcent en poids.

**7.** Article vitrocéramique en aluminosilicate de lithium selon l'une quelconque des revendications précédentes, **caractérisé en ce que** les teneurs en $Fe_2O_3$ et en $V_2O_5$ sont dans un rapport tel que cela permet d'obtenir un coefficient de détermination $R^2$ supérieur à 0,9, de préférence supérieur à 0,95, pour une droite adaptée à la courbe de transmission de la vitrocéramique par la méthode des moindres carrés dans la gamme de longueurs d'onde comprise entre 450 et 600 nanomètres.

**8.** Article vitrocéramique en aluminosilicate de lithium selon l'une quelconque des revendications précédentes, **caractérisé en ce que** la part en poids d'oxyde de fer dans l'article vitrocéramique en aluminosilicate de lithium est de 5 à 20 fois supérieure à la part en poids d'oxyde de vanadium.

9. Article vitrocéramique en aluminosilicate de lithium selon l'une quelconque des revendications précédentes, **caractérisé en ce que** la part en poids de chrome ou d'oxyde de chrome est inférieure à 0,01 %, de préférence inférieure à 0,005 %.

10. Plaque de cuisson vitrocéramique (1) comprenant un article vitrocéramique en aluminosilicate de lithium selon l'une quelconque des revendications précédentes, comprenant de préférence un article vitrocéramique en aluminosilicate de lithium se présentant sous forme de plaque vitrocéramique aluminosilicatée (3).

11. Plaque de cuisson vitrocéramique (1) selon la revendication précédente, **caractérisée en ce qu'**au moins un élément d'affichage (7) auto-luminescent et dont l'éclairage traverse l'article vitrocéramique est agencé sous l'article vitrocéramique, où l'élément d'affichage (7) auto-luminescent est conçu pour émettre de la lumière dans le domaine spectral visible présentant des longueurs d'onde inférieures à 570 nanomètres, de préférence inférieures à 510 nanomètres.

12. Plaque de cuisson vitrocéramique (1) selon l'une des deux revendications précédentes, **caractérisée par** un revêtement (37) bloquant au moins en partie la lumière sur la face inférieure (32) de l'article vitrocéramique.

13. Plaque de cuisson vitrocéramique selon la revendication précédente, **caractérisée en ce que** le revêtement bloquant la lumière présente au moins un évidement (38), où au moins un élément d'affichage (7) auto-luminescent est prévu, lequel est agencé sous l'article vitrocéramique et dont l'éclairage traverse l'évidement (38).

14. Procédé pour fabriquer un article vitrocéramique selon l'une quelconque des revendications 1 à 9, comprenant les étapes suivantes :

- obtention d'un mélange pour des vitrocéramiques en aluminosilicate de lithium, où le mélange présente de l'oxyde de vanadium à raison d'au moins 0,005, de préférence d'au moins 0,01, de manière particulièrement préférée jusqu'à 0,05 pourcent en poids et de l'oxyde d'étain à raison de moins de 0,5 pourcent en poids,
- établissement d'une valeur de transmission supérieure ou égale à 2,5 % dans le domaine spectral visible, où la valeur de transmission est supérieure à la valeur de transmission d'une vitrocéramique fabriquée à partir du même mélange contenant de l'oxyde de vanadium, mais présentant une teneur en oxyde de fer inférieure à 0,1 pourcent en poids,
- ajout d'oxyde de fer comme décolorant dans une quantité annulant l'absorption de l'oxyde de vanadium dans le domaine spectral visible, à un point tel que la valeur de transmission établie est atteinte dans la vitrocéramique,
- fusion du mélange et
- obtention d'un produit semi-fini en verre, ainsi que
- céramisation du produit semi-fini en verre, de manière à obtenir un article vitrocéramique.

<u>1</u>

35        33        31

3        d

7        32

5

Fig. 1

<u>1</u>

35        33        31

3        d

38

7        37        32

5

Fig. 2

Fig. 3

EP 2 864 263 B1

Fig. 4

EP 2 864 263 B1

Fig. 5

EP 2 864 263 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010040443 A2
- DE 102010032112 A1
- DE 102008050263 A1
- DE 19939787 C2

**In der Beschreibung aufgeführte Nicht-Patentliteratur**

- **B. ANDRIANASOLO et al.** Ultrafine grained glass-ceramics obtained with Cr2O3-additions. *J. Non-Cryst. Solids,* 1990, vol. 126, 103-110